# EUROPÄISCHE PATENTSCHRIFT

(11) **EP 2 983 928 B1**
(45) Veröffentlichungstag und Bekanntmachung des Hinweises auf die Patenterteilung: **14.06.2017**
(21) Anmeldenummer: 14715215.1
(22) Anmeldetag: 02.04.2014
(51) Int. Cl.: B60H 1/03

(54) **HEIZSYSTEM UND VERFAHREN ZUM HEIZEN EINES FAHRZEUGINNENRAUMS EINES EINE BRENNKRAFTMASCHINE AUFWEISENDEN FAHRZEUGS**
HEATING SYSTEM AND METHOD FOR HEATING A VEHICLE INTERIOR OF A VEHICLE HAVING AN INTERNAL COMBUSTION ENGINE
SYSTÈME DE CHAUFFAGE ET PROCÉDÉ PERMETTANT DE CHAUFFER L'HABITACLE D'UN VÉHICULE COMPRENANT UN MOTEUR À COMBUSTION INTERNE

(30) Priorität: 10.04.2013 DE 102013006155
(43) Veröffentlichungstag der Anmeldung: 17.02.2016
(73) Patentinhaber: Audi AG, 85045 Ingolstadt (DE)
(72) Erfinder: DJERMESTER, Andreas, 80803 (DE)
(86) Internationale Anmeldenummer: PCT/EP2014/000876
(87) Internationale Veröffentlichungsnummer: WO 2014/166607

(56) Entgegenhaltungen:
- DE-A1- 10 234 087
- DE-A1-102008 035 955
- DE-C1- 19 901 807

## Beschreibung

Die Erfindung betrifft ein Heizsystem zum Heizen eines Fahrzeuginnenraums eines eine Brennkraftmaschine aufweisenden Fahrzeugs gemäß Oberbegriff des Patentanspruchs 1 oder 2. Ferner betrifft die Erfindung eine Heizstrategie zum Heizen eines Fahrzeuginnenraums unter Verwendung des erfindungsgemäßen Heizsystems.

Es ist bekannt, dass bei Fahrzeugen mit Brennkraftmaschinen, die mit einem Heizungswärmetauscher der Klimaanlage des Fahrzeugs gekoppelt sind, die Motorwärme zum Heizen der Fahrzeugkabine benutzt wird. Bei Hybridfahrzeugen wird neben der Brennkraftmaschine auch ein elektrischer Antrieb eingesetzt, wobei die Brennkraftmaschine und der elektrische Antrieb so gesteuert werden, dass hinsichtlich Energieeffizienz möglichst ein Optimum erreicht wird. Dies führt aber dazu, dass die Wärmeerzeugung der Brennkraftmaschine niedrig gehalten wird und daher die Motorwärme nicht immer zur Heizung des Fahrzeuginnenraums ausreicht und daher auch elektrische Heizquellen, wie bspw. ein High-Voltage-PTC-Zuheizer (HV-PTC) eingesetzt werden.

Daher sind für Hybridfahrzeuge Heizsysteme und Heizstrategien erforderlich, welche die vorhandenen Wärmequellen des Fahrzeugs hinsichtlich Energieeffizienz und elektrischer Reichweite des Hybridfahrzeugs optimal nutzt.

Ein gattungsbildendes Heizsystem für ein Fahrzeug mit einer Brennkraftmaschine ist aus der DE 10 2008 035 955 A1 bekannt, bei welchem die Brennkraftmaschine über einen Kühlmitteleinlass und einen Kühlmittelauslass mit einem eine Heizung für den Innenraum des Fahrzeugs aufweisenden, ersten Wärmekreislauf gekoppelt ist. Ferner ist zur Bildung eines zweiten Wärmekreislaufes zwischen dem Kühlmitteleinlass und dem Kühlmittelauslass der Brennkraftmaschine eine Bypass-Leitung des ersten Wärmekreislaufes vorgesehen. Diese von einem Bypass-Ventil gesteuerte Bypass-Leitung weist eine elektrische oder abgasbeheizte Heizquelle sowie einen Temperatursensor auf, wobei diese Heizquelle und der zugehörige Temperatursensor auch in dem ersten Wärmekreislauf in Fließrichtung vor der für den Innenraum vorgesehenen Heizung angeordnet werden kann. Wird von einem am Kühlmittelauslass der Brennkraftmaschine vorgesehener Temperatursensor eine bestimmte Temperatur detektiert, wird ein Einlassventil am Kühlmitteleinlass der Brennkraftmaschine geöffnet, so dass sowohl Kühlmittel durch die Brennkraftmaschine als auch durch die Bypass-Leitung geleitet wird. Dieses Bypass-Ventil wird erst geschlossen, wenn ein Thermostat einen Kühlmittelkreislauf zu einem Fahrzeugkühler öffnet, da ansonsten die über die zusätzliche Heizquelle zugeführte Wärme über den Kühlmittelkreislauf zu dem Fahrzeugkühler abgeführt würde. Bei einem Start der Brennkraftmaschine wird das Kühlmittel bei geöffneten Bypass-Ventil und geschlossenem Einlassventil am Kühlmitteleinlass der Brennkraftmaschine direkt über die Bypass-Leitung und die zusätzliche Heizquelle zur Heizung des Innenraums gefördert. Damit wird bei einem Kaltstart der Brennkraftmaschine diese nicht von Kühlmittel durchströmt, wobei gleichzeitig mittels der Heizquelle das Kühlmittel erwärmt wird.

Ein Nachteil dieses bekannten Heizsystems kann darin gesehen werden, dass bei dessen Verwendung in einem Hybridfahrzeug nicht in allen Betriebszuständen der Antriebe die höchstmögliche Energieeffizienz erreichbar ist.

Auf dem Hintergrund dieses Standes der Technik ist es Aufgabe der Erfindung, ein Heizsystem der eingangs genannten Art derart weiterzubilden, dass bei Einsatz in einem Fahrzeug, insbesondere in einem Hybridfahrzeug mit den vorhandenen Wärme- und Heizquellen eine hohe Energieeffizienz erreicht wird. Ferner ist es Aufgabe der Erfindung eine Heizstrategie zum Heizen des Fahrzeuginnenraums eines Fahrzeugs unter Verwendung des erfindungsgemäßen Heizsystems anzugeben.

Die erstgenannte Aufgabe wird gelöst durch ein Heizsystem mit den Merkmalen des Patentanspruchs 1 und mit den Merkmalen des Patentanspruchs 2.

Ein solches Heizsystem gemäß der erstgenannten Lösung zum Heizen eines Fahrzeuginnenraums eines eine Brennkraftmaschine aufweisenden Fahrzeugs mittels eines Heizungswärmetauschers, welches
- einen den Heizungswärmetauscher mit dem Brennkraftmaschine koppelnden, von einem Kühlmittel durchströmten ersten Wärmekreislauf,
- eine die Brennkraftmaschine umgehende Bypass-Leitung des ersten Wärmekreislaufes mit einem Bypass-Ventil zur Bildung eines zweiten Wärmekreislaufes,
- wenigstens eine in Fließrichtung des Kühlmittels nach der Bypass-Leitung angeordneten Heizquelle, und
- einen ersten Temperatursensor zur Messung der Kühlmitteltemperatur an einem Kühlmittelausgang der Brennkraftmaschine umfasst, zeichnet sich erfindungsgemäß dadurch aus, dass
- ein zweiter Temperatursensor zur Messung der Kühlmitteltemperatur an einem Kühlmitteleingang der Brennkraftmaschine vorgesehen ist,
- ein dritter Temperatursensor zur Messung der Kühlmitteltemperatur in Fließrichtung des Kühlmittels vor der wenigstens einen Heizquelle vorgesehen ist, und
- bei Vorliegen einer ersten Bedingung, bei welcher der erste Temperatursensor mindestens eine vorgegebene Sollvorlauftemperatur des Heizungswärmetauschers detektiert, der erste Wärmekreislauf nur mit der Brennkraftmaschine als Wärmequelle betrieben wird und bei Nichtvorliegen dieser ersten Bedingung und bei Vorliegen einer zweiten Bedingung, bei welcher bei Betrieb des ersten Wärmekreislaufes der erste Temperatursensor eine über der von dem zweiten Temperatursensor detektierten Kühlmitteltemperatur erfasst, die wenigstens eine Heizquelle als weitere Wärmequelle betrieben wird oder bei welcher bei Betrieb des zweiten Wärmekreislaufes der erste Temperatursensor eine über der von dem dritten Temperatursensor detektierten Kühlmitteltemperatur erfasst, der erste Wärmekreislauf zusammen mit der wenigstens einen Heizquelle betrieben wird.

Das Heizsystem gemäß der zweitgenannten Lösung zeichnet sich erfindungsgemäßen dadurch aus, dass
- ein zweiter Temperatursensor zur Messung der Kühlmitteltemperatur am Eingang des Bypass-Ventils vorgesehen ist,
- bei Vorliegen einer ersten Bedingung, bei welcher der erste Temperatursensor mindestens eine vorgegebene Sollvorlauftemperatur des Heizungswärmetauschers detektiert, der erste Wärmekreislauf nur mit der Brennkraftmaschine als Wärmequelle betrieben wird und bei Nichtvorliegen dieser ersten Bedingung und bei Vorliegen einer zweiten Bedingung, bei welcher bei Betrieb des ersten Wärmekreislaufes der erste Temperatursensor eine über der von dem zweiten Temperatursensor detektierten Kühlmitteltemperatur erfasst, die wenigstens eine Heizquelle als weitere Wärmequelle betrieben wird oder bei welcher bei Betrieb des zweiten Wärmekreislaufes der erste Temperatursensor eine über der von dem zweiten Temperatursensor detektierten Kühlmitteltemperatur erfasst, der erste Wärmekreislauf zusammen mit der wenigstens einen Heizquelle betrieben wird.

Mit einem solchen erfindungsgemäßen Heizsystem gemäß den genannten Lösungen wird der energetisch ideale Zeitpunkt für die Umschaltung von dem ersten Wärmekreislauf, bei welchem die Motorwärme der Brennkraftmaschine zur Verfügung steht, in den zweiten Wärmekreislauf, bei dem mittels der Bypass-Leitung die Brennkraftmaschine umgangen wird, und umgekehrt, mit Hilfe von drei bzw. zwei an geeigneter Stelle im Wärmekreislauf angeordneten Kühlmitteltemperatursensoren sichergestellt. In Abhängigkeit von bestimmten Relationen dieser ermittelten Temperaturen wird die entsprechende Umschaltung zwischen den beiden Wärmekreisläufen bewirkt. Ferner kann mithilfe dieser drei Temperatursensoren die Robustheit des Schaltverhaltens zwischen diesen beiden Wärmekreisläufen maximiert werden.

Der Unterschied der zweitgenannten Lösung zur erstgenannten Lösung besteht darin, dass der zweite Temperatursensor auch die Funktion des dritten Temperatursensors übernimmt, indem dieser in Fließrichtung des Kühlmittel vor dem Bypass-Ventil angeordnet ist, so dass sowohl bei aktivierten ersten als auch bei aktivierten zweiten Wärmekreislauf die Temperatur des Kühlmittels an der geeigneten Stelle gemessen wird. Diese Lösung kann dann eingesetzt werden, wenn die Leitungslängen der beiden Wärmekreisläufe sehr kurz und daher nur vernachlässigbare Wärmeverluste auftreten können.

Ein weiterer Vorteil der beiden erfindungsgemäßen Lösungen besteht darin, dass für die Realisierung des erfindungsgemäßen Heizsystems nur ein geringer Applikationsaufwand erforderlich ist, da nicht für jede Kombination von Varianten von Brennkraftmaschinen und Heizungswärmetauscher exakte Kennfelder für die verschiedenen Arbeitspunkte herausgefahren werden müssen.

Schließlich wird mit einem solchen erfindungsgemäßen Heizsystem gemäß den beiden Lösungen eine bessere Aufheizdynamik erzielt, da durch das rechtzeitige Schalten in den zweiten Wärmekreislauf, wenn die Brennkraftmaschine nicht mehr als Heizquelle dienen kann und daher von der Bypass-Leitung umgangen wird, weniger Kühlmittel aufgeheizt werden muss.

Wenn gemäß einer Ausgestaltung der Erfindung sowohl die erste als auch die zweite Bedingung nicht erfüllt ist, wird nur der zweite Wärmekreislauf mit der wenigstens einen Heizquelle als Wärmequelle betrieben. In diesem Fall, wenn also beide Bedingungen nicht erfüllt sind, wäre die Brennkraftmaschine eine Wärmesenke. Somit wird verhindert, dass die Brennkraftmaschine durch das elektrische Heizen mittels der Heizquelle, die vorzugsweise ein Wärmetauscher und/oder ein PTC-Widerstand und/oder ein fossiler Zuheizer ist, mit aufgeheizt wird.

Die zweitgenannte Aufgabe wird gelöst durch eine Heizstrategie mit den Merkmalen des Patentanspruchs 5 und des Patentanspruchs 6.

Eine solche Heizstrategie gemäß der erstgenannten Lösung zum Heizen eines Fahrzeuginnenraums eines eine Brennkraftmaschine aufweisenden Fahrzeugs mittels eines Heizungswärmetauschers unter Verwendung
- eines den Heizungswärmetauscher mit dem Brennkraftmaschine koppelnden, von einem Kühlmittel durchströmten ersten Wärmekreislaufes,
- einer die Brennkraftmaschine umgehende Bypass-Leitung des ersten Wärmekreislaufes mit einem Bypass-Ventil zur Bildung eines zweiten Wärmekreislaufes, und
- wenigstens einer in Fließrichtung des Kühlmittels nach der Bypass-Leitung angeordneten Heizquelle, zeichnet sich erfindungsgemäß dadurch aus, dass
- bei Vorliegen einer ersten Bedingung, bei welcher die Kühlmitteltemperatur an einem Kühlmittelausgang der Brennkraftmaschine mindestens eine vorgegebene Sollvorlauftemperatur des Heizungswärmetauschers erreicht, der erste Wärmekreislauf nur mit der Brennkraftmaschine als Wärmequelle betrieben wird und bei Nichtvorliegen dieser ersten Bedingung und bei Vorliegen einer zweiten Bedingung, bei welcher bei Betrieb des ersten Wärmekreislaufes die Kühlmitteltemperatur an dem Kühlmittelausgang der Brennkraftmaschine über der Kühlmitteltemperatur an einem Kühlmitteleingang der Brennkraftmaschine liegt, zusätzlich die wenigstens eine Heizquelle als weitere Wärmequelle betrieben wird oder bei welcher bei Betrieb des zweiten Wärmekreislaufes die Kühlmitteltemperatur an dem Kühlmittelausgang der Brennkraftmaschine über der Kühlmitteltemperatur in Fließrichtung des Kühlmittels vor der wenigstens einen Heizquelle liegt, der erste Wärmekreislauf und zusätzlich die wenigstens eine Heizquelle betrieben wird.

Die zweitgenannte Lösung zeichnet sich erfindungsgemäß dadurch aus, dass bei Vorliegen einer ersten Bedingung, bei welcher die Kühlmitteltemperatur an einem Kühlmittelausgang der Brennkraftmaschine mindestens eine vorgegebene Sollvorlauftemperatur des Heizungswärmetauschers erreicht, der erste Wärmekreislauf nur mit der Brennkraftmaschine als Wärmequelle betrieben wird und bei Nichtvorliegen dieser ersten Bedingung und bei Vorliegen einer zweiten Bedingung, bei welcher bei Betrieb des ersten Wärmekreislaufes die Kühlmitteltemperatur an dem Kühlmittelausgang der Brennkraftmaschine über der Kühlmitteltemperatur an dem Eingang des Bypass-Ventils, zusätzlich die wenigstens eine Heizquelle als weitere Wärmequelle betrieben wird oder bei welcher bei Betrieb des zweiten Wärmekreislaufes die Kühlmitteltemperatur an dem Kühlmittelausgang der Brennkraftmaschine über der Kühlmitteltemperatur an dem Eingang des Bypass-Ventils liegt, der erste Wärmekreislauf und zusätzlich die wenigstens eine Heizquelle betrieben wird.

Die im Zusammenhang mit dem erfindungsgemäßen Heizsystem genannten Vorteile treffen auch auf diese Heizstrategie zu.

In vorteilhafter Weise ist weiterbildungsgemäß vorgesehen, dass bei Nichterfüllen sowohl der ersten als auch der zweiten Bedingung nur der zweite Wärmekreislauf mit der wenigstens einen Heizquelle als einzige Wärmequelle betrieben wird.

Die Erfindung wird nachfolgend anhand eines Ausführungsbeispiels unter Bezugnahme auf die beigefügten Figuren ausführlich beschrieben. Es zeigen:
- Figur 1: ein Blockschaltbild eines Heizsystems eines Fahrzeugs als Ausführungsbeispiel der Erfindung mit einer Hervorhebung eines ersten Wärmekreislaufes,
- Figur 2: ein Blockschaltbild des Heizsystems nach Figur 1 mit einer Hervorhebung des zweiten Wärmekreislaufes,
- Figur 3: ein Ablaufdiagramm einer mit dem Heizsystem gemäß den Figuren 1 und 2 durchgeführten Heizstrategie gemäß der Erfindung, und
- Figur 4: ein Blockschaltbild eines Heizsystems eines Fahrzeugs als weiteres Ausführungsbeispiel der Erfindung.

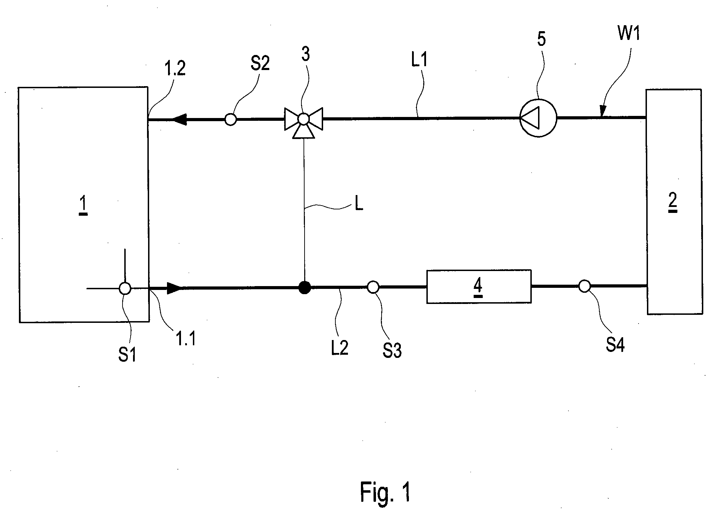

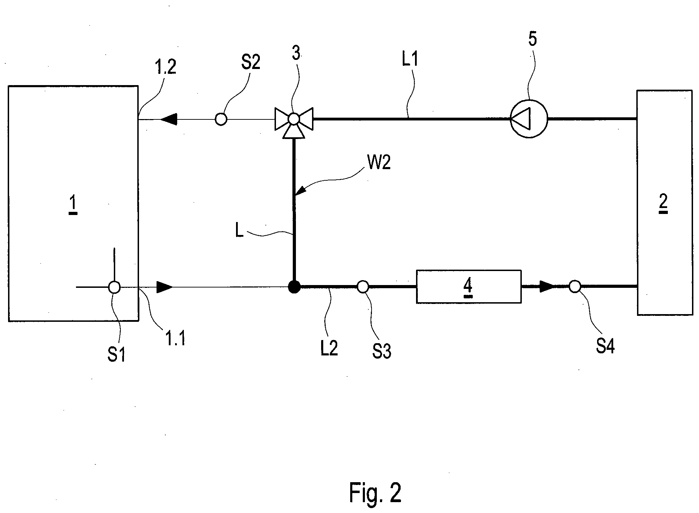

Die Struktur eines Heizsystems eines Hybridfahrzeuges für dessen Innenraum gemäß den Figuren 1 und 2 umfasst eine Brennkraftmaschine 1 sowie einen Heizungswärmetauscher 2, welcher Teil einer Klimaanlage des Hybridfahrzeuges ist. Die Brennkraftmaschine 1 sowie der Heizungswärmetauscher 2 sind über einen Heizkreis miteinander gekoppelt.

Dieser Heizkreis besteht zum einen aus einer Verbindungsleitung L1, die den Heizungswärmetauscher 2 über eine elektrische Kühlwasserpumpe 5 und einem 2/3-Wegeventil 3 mit einem Kühlmitteleingang 1.2 der Brennkraftmaschine 1 verbindet und zum anderen aus einer Verbindungsleitung L2, die einen Kühlmittelausgang 1.1 der Brennkraftmaschine 1 über eine Heizquelle 4 mit dem Heizungswärmetauscher 2 verbindet.

Ferner umfasst dieser Heizkreis eine die Brennkraftmaschine 1 umgehende Bypass-Leitung L, die von dem 2/3-Wege-Ventil 3 als Bypass-Ventil geöffnet oder verschlossen werden kann. Zur Messung der Kühlmitteltemperatur T1 am Kühlmittelausgang 1.1 der Brennkraftmaschine in Richtung des Heizungswärmetauschers 2 ist ein erster Temperatursensor S1 vorgesehen.

Dieser erste Temperatursensor S1 ist dem Kühlkreislauf der Brennkraftmaschine 1 so angeordnet, dass dieser von dem Kühlmittel unabhängig von dem Schaltzustand des Bypass-Ventils 3 umströmt wird und daher immer einen repräsentativen Wert für die Kühlmitteltemperatur liefert.

Mittels eines zweiten Temperatursensors S2 wird die Kühlmitteltemperatur T2 am Kühlmitteleingang 1.2 der Brennkraftmaschine 1 detektiert. Ein dritter Temperatursensor S3 misst die Kühlmitteltemperatur T3 in Fließrichtung des Kühlmittels direkt vor der Heizquelle 4, ist also erst nach der Einmündung der Bypass-Leitung L in die Verbindungsleitung L2 angeordnet. Schließlich ist zur Messung der Vorlauftemperatur vor dem Heizungswärmetauscher 2 in der Verbindungsleitung L2 ein vierter Temperatursensor S4 angeordnet.

Wird die Bypass-Leitung L von diesem Bypass-Ventil 3 geschlossen, so entsteht ein erster Wärmekreislauf W1, bei dem ein Kühlmittel ausgehend von dem Heizungswärmetauscher 2 über die Kühlwasserpumpe 5 und das Bypass-Ventil 3 in die Brennkraftmaschine 1 und von dort über die Verbindungsleitung L2 wieder zurück in den Heizungswärmetauscher 2 zurückfließt. Dieser ersten Wärmekreislauf W1 ist in Figur 1 grafisch hinsichtlich der Verbindungsleitungen L1 und L2 mit dickeren Linien im Vergleich zur Bypass-Leitung L dargestellt. Bei einer Aktivierung dieses ersten Wärmekreislaufes W1 wird die Abwärme der Brennkraftmaschine 1 als Wärmequelle für das Heizsystem und somit zur Heizung des Innenraums des Fahrzeugs verwendet.

Wird dagegen die Bypass-Leitung L von dem Bypass-Ventil 3 geöffnet, so entsteht ein zweiter Wärmekreislauf W2, bei dem das Kühlmittel ausgehend von dem Heizungswärmetauscher 2 über die Kühlwasserpumpe 5, das Bypass-Ventil 3 und anschließend über die Bypass-Leitung L in den Heizungswärmetauscher 2 zurückfließt. Dieser zweite Wärmekreislauf W2 ist in Figur 2 grafisch hinsichtlich der Verbindungsleitung L1 bis zum Bypass-Ventil 3, der Bypass-Leitung L und der verbleibenden Verbindungsleitung L2 bis zum Heizungswärmetauscher 2 mit dicken Linien hervorgehoben. Bei einer Aktivierung dieses zweiten Wärmekreislaufes W2 wird lediglich die Heizquelle 4 als Wärmequelle für die Erwärmung des Kühlmittels und damit für die Beheizung des Innenraums des Fahrzeugs verwendet.

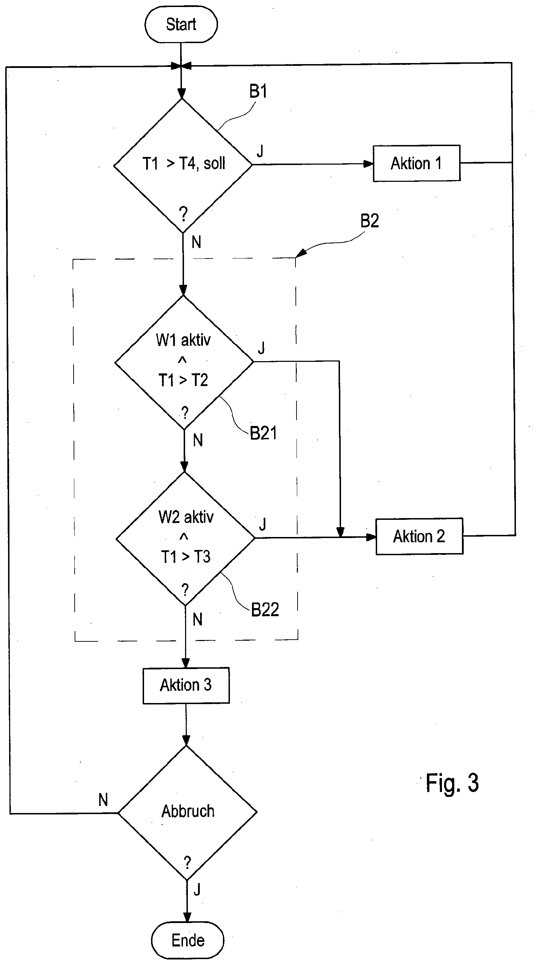

Die mit dem Heizsystem gemäß den Figuren 1 und 2 durchgeführte Heizstrategie wird im Folgenden anhand des Ablaufdiagrammes nach Figur 3 erläutert.

Zur Durchführung dieser Heizstrategie werden die Temperaturwerte der Temperatursensoren S1 bis S4 zyklisch entsprechend des Ablaufdiagrammes nach Figur 3 abgefragt, miteinander verglichen und bei bestimmten Relationen dieser Temperaturwerte gemäß vorgegebenen Bedingungen verschiedene Aktionen, nämlich gemäß dem Ablaufdiagramm nach Figur 3 eine der Aktionen 1 bis 3 durchgeführt.

Gemäß Figur 3 wird nach dem Start eine erste Bedingung B1 geprüft, ob die Kühlmitteltemperatur T1 am Kühlmittelausgang 1.1 der Brennkraftmaschine 1 größer als eine vorgegebene Sollvorlauftemperatur T_{4,soll} vor dem Heizungswärmetauscher 2 ist (T1> T_{4,soll}). Falls diese erste Bedingung B1 zutrifft, wird als Aktion 1 der erste Wärmekreislauf W1 aktiviert, d.h. das Bypass-Ventil 3 verschließt die Bypass-Leitung L, so dass lediglich die Brennkraftmaschine 1 als einzige Wärmequelle für den Heizkreis und damit für den Innenraum des Fahrzeugs verwendet wird.

Wird diese erste Bedingung B1 nicht erfüllt, wird in weiteren Schritten das Vorliegen einer zweiten Bedingung B2 geprüft, die zwei Unterbedingungen B21 und B22 umfasst.

Falls gemäß der Unterbedingung B21 der erste Wärmekreislauf W1 gemäß Figur 1 aktiviert ist und die Kühlmitteltemperatur T1 am Kühlmittelausgang 1.1 der Brennkraftmaschine 1 größer ist als die Kühlmitteltemperatur T2 am Kühlmitteleingang 1.2 der Brennkraftmaschine 1 (T1 > T2), wird als Aktion 2 zusätzlich die Heizquelle 4 als weitere Wärmequelle neben der Brennkraftmaschine 1 als Wärmequelle aktiviert.

Trifft diese Unterbedingung B21 nicht zu, wird die zweite Unterbedingung B22 geprüft. Falls gemäß dieser Unterbedingung B22 der zweite Wärmekreislauf W2 gemäß Figur 2 aktiviert ist und die Kühlmitteltemperatur T1 am Kühlmittelausgang 1.1 der Brennkraftmaschine 1 größer ist als die Kühlmitteltemperatur T3 vor der Heizquelle 4 (T1 > T3) wird als Aktion 2 auf den ersten Wärmekreislauf W1 umgeschaltet, so dass zusätzlich zur Heizquelle 4 als Wärmequelle für den Heizkreis auch die Brennkraftmaschine 1 als weitere Wärmequelle zur Heizung des Innenraums des Fahrzeugs verwendet wird.

Diese zweite Bedingung bedeutet, dass die Brennkraftmaschine als Heizquelle zur Heizung des Fahrzeuginnenraums eingebunden wird, sobald die Brennkraftmaschine 1 hierzu fähig ist.

Falls die zweite Bedingung B2, also weder die Unterbedingung B21 noch die Unterbedingung B22 zutrifft, wird gemäß Figur 3 als Aktion 3 auf den zweiten Wärmekreislauf W2 umgeschaltet und aktiviert, so dass lediglich die Heizquelle 4 als Wärmequelle für den Heizkreis verwendet wird. Durch Öffnen der Bypass-Leitung L mittels des Bypass-Ventils 3 wird die Brennkraftmaschine 1 als Wärmequelle ausgekoppelt, da sie ansonsten eine Wärmesenke für die von der Heizquelle 4 erzeugte Wärme darstellen würde. Dies wäre dann der Fall, wenn die Brennkraftmaschine 1 während des aktiven ersten Wärmekreislaufes W1 zunächst als Wärmequelle dient, aber anschließend soweit abkühlt, dass sie hinsichtlich des Kühlmittels zu einer Wärmesenke werden und daher von der von einer Heizquelle 4 oder von mehreren solchen Heizquellen 4 elektrisch erzeugten Wärme aufgeheizt würde. Dies würde einer energieeffizienten Einsatzes der vorhandenen Wärmequelle widersprechen.

Falls in dem letztgenannten Fall die Heizquelle 4 nicht zur Verfügung stehen würde, würde wieder der erste Wärmekreislauf W1 aktiviert und das Heizsystem lediglich die Abwärme der Brennkraftmaschine 1 nutzen.

Um eine robuste, insbesondere stabile Funktion der erfindungsgemäßen Heizstrategie sicherzustellen, sind die oben angeführten Temperaturbeziehungen idealtypisch und müssen für die praktische Umsetzung diese mit entsprechenden Hysteresen und Mindestverweildauern ergänzt werden, um bspw. zu verhindern, dass eine laufende Umschaltung zwischen dem ersten und zweiten Wärmekreislauf W1 und W2 erfolgt.

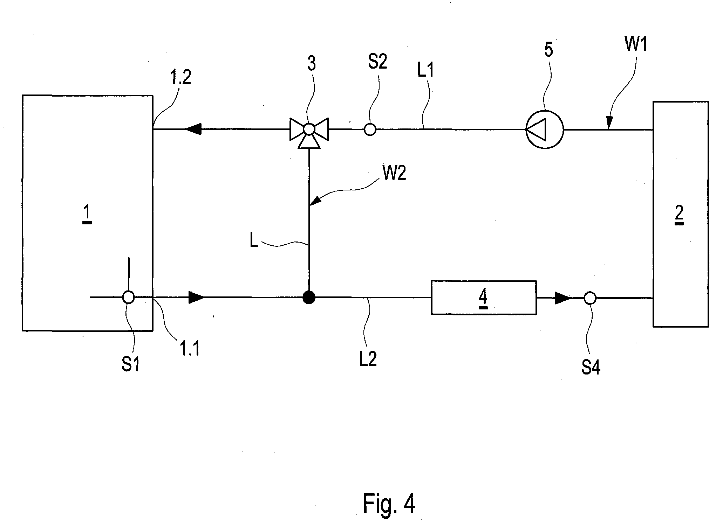

Eine optionale Struktur eines erfindungsgemäßen Heizsystem für ein Hybridfahrzeug zeigt Figur 4, welches sich von demjenigen Heizsystem gemäß den Figuren 1 und 2 darin unterscheidet, dass die Funktion des dritten Temperatursensor S3 von dem zweiten Temperatursensor S2 übernommen wird, wobei jedoch in diesem Fall dieser zweite Temperatursensor S2 in Fließrichtung des Kühlmittels vor dem Bypass-Ventil 3 in den Kühlmittelkreislauf geschaltet ist, sich also zwischen diesem Bypass-Ventil 3 und der Kühlmittelpumpe 5 befindet. Somit befindet sich dieser zweite Temperatursensor S2 sowohl im ersten Wärmekreislauf W1 als auch in den zweiten Wärmekreislauf W2. Diese Struktur gemäß Figur 4 kann dann eingesetzt werden, wenn die Leitungslängen sehr kurz und daher kaum Wärmeverluste auftreten können. Die zugehörige Heizstrategie unterscheidet sich von derjenigen gemäß Figur 3 lediglich dadurch, dass anstelle der Temperatur T3 in der Nebenbedingung B22 die Temperatur T2 des zweiten Temperatursensor S2 verwendet wird. Der Vorteil dieses Heizsystems gemäß Figur 4 liegt in der geringeren Anzahl von Temperatursensoren, da der dritte Temperatursensor T3 entsprechend dem Heizsystem nach Figur 1 und 2 nicht erforderlich ist.

In den oben erläuterten Ausführungsbeispielen wird lediglich eine einzige Heizquelle 4 verwendet, natürlich können auch mehrere solcher Heizquellen eingesetzt werden. Als Heizquelle eignen sich PTC-Zuheizer, wie beispielsweise HV-PTCs und/oder Wärmetauscher von Wärmepumpen und/oder fossiler Zuheizer.

Mit dieser erfindungsgemäßen Heizstrategie wird der energetisch ideale Zeitpunkt für die Umschaltung von dem ersten Wärmekreislauf W1, bei welchem die Motorwärme der Brennkraftmaschine 1 zur Verfügung steht, in den zweiten Wärmekreislauf W2, bei dem mittels der Bypass-Leitung L die Brennkraftmaschine 1 umgangen wird, und umgekehrt, mit Hilfe von drei bzw. zwei an geeigneter Stelle im Heizsystem angeordneten Kühlmitteltemperatursensoren S1 bis S3 bzw. S1 und S2 sichergestellt. Dadurch wird vermieden, dass die Brennkraftmaschine beim elektrischen Heizen mittels der oder den Heizquelle(n) mit aufgeheizt wird. Diese Heizstrategie erlaubt mithilfe der Temperatursensoren die Brennkraftmaschine als Wärmequelle oder als Wärmesenke zu bilanzieren, so dass situativ die effizienteste Verschaltung und eventuell zusätzlich eine Aktivierung der zusätzlichen Heizquelle(n) für die Aufheizung des Innenraums des Fahrzeugs veranlasst werden.

Wenn beispielsweise für den Innenraum eine bestimmte Kühlmittelvorlauftemperatur für den Heizungswärmetauscher gefordert wird, wird mittels der erfindungsgemäßen Heizstrategie diese Forderung energieeffizient erfüllt, wobei hierzu die "günstigste" Wärmequelle, in diesem Fall die Abwärme der Brennkraftmaschine verwendet wird. Bei Verwendung von mehreren Heizquellen wird deren Aktivierung unter Berücksichtigung der günstigsten Leistungszahl (COP) vorgenommen.

Wird bspw. ein Hybridfahrzeug im kalten Zustand gestartet und fährt zunächst rein elektrisch, erfolgt die Heizung des Innenraums ausschließlich mittels der zusätzlichen Heizquellen 4, wobei der Motor als Wärmesenke erkannt wird, so wird der zweite Wärmekreislauf aktiviert, das erwärmte Kühlmittel kann daher nicht über die "kalte" Brennkraftmaschine 1 fließen. Wird im Laufe der Fahrt, z.B. wegen hoher Geschwindigkeit die Brennkraftmaschine 1 gestartet, wird diese zunehmend wärmer. Sobald sich die Brennkraftmaschine 1 sich so weit erwärmt hat, dass deren Abwärme zum Heizen des Innenraums beitragen kann, d. h. wenn die Kühlmitteltemperatur T1 die zweite Bedingung erfüllt, wird die Brennkraftmaschine 1 mittels des ersten Wärmekreislaufes W1 eingebunden, so dass der Innenraum sowohl von der Abwärme der Brennkraftmaschine als auch von den Heizquellen 4 als Wärmequelle beheizt wird. Sobald jedoch die Kühlmitteltempertur T1 aufgrund der zunehmenden Abwärme die von der Temperatureinstellung abhängige Vorlauftemperatur des Heizungswärmetauschers 2 erreicht hat, wird die zusätzliche Heizquelle 4 oder mehrere solcher Heizquellen 4 stufenweise abgeschaltet, so dass nur die Brennkraftmaschine 1 als einzige Heizquelle das Heizen des Innenraums übernimmt.

Zur Durchführung dieser Heizstrategie sind nur die genannten Temperatursensoren S1 bis. S3 bzw. S1 und S2 erforderlich, ist also unabhängig von Motor-und Klimagerätevarianten. Die Energiebilanz von Brennkraftmaschine und des Heizungswärmetauschers werden ausschließlich über die Temperatursensoren S1 bis S3 erfasst. Daher sind keine spezifischen thermischen Modelle von Brennkraftmaschine und Heizungswärmetauscher in einer entsprechenden Applikationssoftware erforderlich.

Der Applikationsaufwand ist gering, da nicht für jede Kombination von Varianten von Brennkraftmaschine und Heizungswärmetauscher exakte Kennfelder für die verschiedenen Arbeitspunkte herausgefahren werden müssen.

### Bezugszeichen

- 1: Brennkraftmaschine
- 1.1: Kühlmittelausgang der Brennkraftmaschine 1
- 1.2: Kühlmitteleingang der Brennkraftmaschine 1
- 2: Heizungswärmetauscher
- 3: Bypass-Ventil
- 4: Heizquelle
- 5: Kühlmittelpumpe

- B1: erste Bedingung
- B2: zweite Bedingung
- B21: Unterbedingung der zweiten Bedingung B2
- B22: Unterbedingung der zweiten Bedingung B2

- L: Bypass-Leitung
- L1: erste Verbindungsleitung
- L 2: zweite Verbindungsleitung

- S 1: erster Temperatursensor
- S 2: zweiter Temperatursensor
- S 3: dritter Temperatursensor
- S 4: vierter Temperatursensor

- W1: erster Wärmekreislauf
- W2: zweiter Wärmekreislauf

## Patentansprüche

1. Heizsystem zum Heizen eines Fahrzeuginnenraums eines eine Brennkraftmaschine (1) aufweisenden Fahrzeugs mittels eines Heizungswärmetauschers (2), umfassend
- einen den Heizungswärmetauscher (2) mit der Brennkraftmaschine (1) koppelnden, von einem Kühlmittel durchströmten ersten Wärmekreislauf (W1),
- eine die Brennkraftmaschine (1) umgehende Bypass-Leitung (L) des ersten Wärmekreislaufes (W1) mit einem Bypass-Ventil (3) zur Bildung eines zweiten Wärmekreislaufes (W2),
- wenigstens eine in Fließrichtung des Kühlmittels nach der Bypass-Leitung (L) angeordneten Heizquelle (4), und
- einen ersten Temperatursensor (S1) zur Messung der Kühlmitteltemperatur an einem Kühlmittelausgang (1.1) der Brennkraftmaschine (1), **dadurch gekennzeichnet, dass**
- ein zweiter Temperatursensor (S2) zur Messung der Kühlmitteltemperatur an einem Kühlmitteleingang (1.2) der Brennkraftmaschine (1) vorgesehen ist,
- ein dritter Temperatursensor (S3) zur Messung der Kühlmitteltemperatur in Fließrichtung des Kühlmittels vor der wenigstens einen Heizquelle (4) vorgesehen ist, und
- bei Vorliegen einer ersten Bedingung, bei welcher der erste Temperatursensor (S1) mindestens eine vorgegebene Sollvorlauftemperatur (T_{4,soll}) des Heizungswärmetauschers (2) detektiert, der erste Wärmekreislauf (W1) nur mit der Brennkraftmaschine (1) als Wärmequelle betrieben wird und bei Nichtvorliegen dieser ersten Bedingung und bei Vorliegen einer zweiten Bedingung, bei welcher bei Betrieb des ersten Wärmekreislaufes (W1) der erste Temperatursensor (S1) eine über der von dem zweiten Temperatursensor (S2) detektierten Kühlmitteltemperatur erfasst, die wenigstens eine Heizquelle (4) als weitere Wärmequelle betrieben wird oder bei welcher bei Betrieb des zweiten Wärmekreislaufes (W2) der erste Temperatursensor (S1) eine über der von dem dritten Temperatursensor (S3) detektierten Kühlmitteltemperatur erfasst, der erste Wärmekreislauf (W1) zusammen mit der wenigstens einen Heizquelle (4) betrieben wird.

2. Heizsystem zum Heizen eines Fahrzeuginnenraums eines eine Brennkraftmaschine (1) aufweisenden Fahrzeugs mittels eines Heizungswärmetauschers (2), umfassend
- einen den Heizungswärmetauscher (2) mit der Brennkraftmaschine (1) koppelnden, von einem Kühlmittel durchströmten ersten Wärmekreislauf (W1),
- eine die Brennkraftmaschine (1) umgehende Bypass-Leitung (L) des ersten Wärmekreislaufes (W1) mit einem Bypass-Ventil (3) zur Bildung eines zweiten Wärmekreislaufes (W2),
- wenigstens eine in Fließrichtung des Kühlmittels nach der Bypass-Leitung (L) angeordneten Heizquelle (4), und
- einen ersten Temperatursensor (S1) zur Messung der Kühlmitteltemperatur an einem Kühlmittelausgang (1.1) der Brennkraftmaschine (1), **dadurch gekennzeichnet, dass**
- ein zweiter Temperatursensor (S2) zur Messung der Kühlmitteltemperatur am Eingang des Bypass-Ventils (3) vorgesehen ist,
- bei Vorliegen einer ersten Bedingung, bei welcher der erste Temperatursensor (S1) mindestens eine vorgegebene Sollvorlauftemperatur (T_{4,soll}) des Heizungswärmetauschers (2) detektiert, der erste Wärmekreislauf (W1) nur mit der Brennkraftmaschine (1) als Wärmequelle betrieben wird und bei Nichtvorliegen dieser ersten Bedingung und bei Vorliegen einer zweiten Bedingung, bei welcher bei Betrieb des ersten Wärmekreislaufes (W1) der erste Temperatursensor (S1) eine über der von dem zweiten Temperatursensor (S2) detektierten Kühlmitteltemperatur erfasst, die wenigstens eine Heizquelle (4) als weitere Wärmequelle betrieben wird oder bei welcher bei Betrieb des zweiten Wärmekreislaufes (W2) der erste Temperatursensor (S1) eine über der von dem zweiten Temperatursensor (S2) detektierten Kühlmitteltemperatur erfasst, der erste Wärmekreislauf (W1) zusammen mit der wenigstens einen Heizquelle (4) betrieben wird.

3. Heizsystem nach Anspruch 1 oder 2,
**dadurch gekennzeichnet, dass** bei Nichterfüllen sowohl der ersten als auch der zweiten Bedingung nur der zweite Wärmekreislauf (W2) mit der wenigstens einen Heizquelle (4) als Wärmequelle betrieben wird.

4. Heizsystem nach einem der vorhergehenden Ansprüche,
**dadurch gekennzeichnet, dass** die wenigstens eine Heizquelle (4) ein Wärmetauscher und/oder ein PTC-Widerstand und/oder ein fossiler Zuheizer ist.

5. Heizstrategie zum Heizen eines Fahrzeuginnenraums eines eine Brennkraftmaschine (1) aufweisenden Fahrzeugs mittels eines Heizungswärmetauschers (2), insbesondere nach einem der vorhergehenden Ansprüche, unter Verwendung
- eines den Heizungswärmetauscher (2) mit der Brennkraftmaschine (1) koppelnden, von einem Kühlmittel durchströmten ersten Wärmekreislaufes (W1),
- einer die Brennkraftmaschine (1) umgehende Bypass-Leitung (L) des ersten Wärmekreislaufes (W1) mit einem Bypass-Ventil (3) zur Bildung eines zweiten Wärmekreislaufes (W2), und
- wenigstens einer in Fließrichtung des Kühlmittels nach der Bypass-Leitung (L) angeordneten Heizquelle (4),
**dadurch gekennzeichnet, dass**
- bei Vorliegen einer ersten Bedingung, bei welcher die Kühlmitteltemperatur (T1) an einem Kühlmittelausgang (1.1) der Brennkraftmaschine (1) mindestens eine vorgegebene Sollvorlauftemperatur (T_{4,soll}) des Heizungswärmetauschers (2) erreicht, der erste Wärmekreislauf (W1) nur mit der Brennkraftmaschine (1) als Wärmequelle betrieben wird und bei Nichtvorliegen dieser ersten Bedingung und bei Vorliegen einer zweiten Bedingung, bei welcher bei Betrieb des ersten Wärmekreislaufes (W1) die Kühlmitteltemperatur (T1) an dem Kühlmittelausgang (1.1) der Brennkraftmaschine (1) über der Kühlmitteltemperatur (T2) an einem Kühlmitteleingang (1.2) der Brennkraftmaschine (1) liegt, zusätzlich die wenigstens eine Heizquelle (4) als weitere Wärmequelle betrieben wird oder bei welcher bei Betrieb des zweiten Wärmekreislaufes (W2) die Kühlmitteltemperatur (T1) an dem Kühlmittelausgang (1.1) der Brennkraftmaschine (1) über der Kühlmitteltemperatur (T3) in Fließrichtung des Kühlmittels vor der wenigstens einen Heizquelle (4) liegt, der erste Wärmekreislauf (W1) und zusätzlich die wenigstens eine Heizquelle (4) betrieben wird.

6. Heizstrategie zum Heizen eines Fahrzeuginnenraums eines eine Brennkraftmaschine (1) aufweisenden Fahrzeugs mittels eines Heizungswärmetauschers (2), insbesondere nach einem der Ansprüche 1 bis 4, unter Verwendung
- eines den Heizungswärmetauscher (2) mit der Brennkraftmaschine (1) koppelnden, von einem Kühlmittel durchströmten ersten Wärmekreislaufes (W1),
- einer die Brennkraftmaschine (1) umgehende Bypass-Leitung (L) des ersten Wärmekreislaufes (W1) mit einem Bypass-Ventil (3) zur Bildung eines zweiten Wärmekreislaufes (W2), und
- wenigstens einer in Fließrichtung des Kühlmittels nach der Bypass-Leitung (L) angeordneten Heizquelle (4),
**dadurch gekennzeichnet, dass**
- bei Vorliegen einer ersten Bedingung, bei welcher die Kühlmitteltemperatur (T1) an einem Kühlmittelausgang (1.1) der Brennkraftmaschine (1) mindestens eine vorgegebene Sollvorlauftemperatur (T_{4,soll}) des Heizungswärmetauschers (2) erreicht, der erste Wärmekreislauf (W1) nur mit der Brennkraftmaschine (1) als Wärmequelle betrieben wird und bei Nichtvorliegen dieser ersten Bedingung und bei Vorliegen einer zweiten Bedingung, bei welcher bei Betrieb des ersten Wärmekreislaufes (W1) die Kühlmitteltemperatur (T1) an dem Kühlmittelausgang (1.1) der Brennkraftmaschine (1) über der Kühlmitteltemperatur (T2) an dem Eingang des Bypass-Ventils (3), zusätzlich die wenigstens eine Heizquelle (4) als weitere Wärmequelle betrieben wird oder bei welcher bei Betrieb des zweiten Wärmekreislaufes (W2) die Kühlmitteltemperatur (T1) an dem Kühlmittelausgang (1.1) der Brennkraftmaschine (1) über der Kühlmitteltemperatur (T2) an dem Eingang des Bypass-Ventils (3) liegt, der erste Wärmekreislauf (W1) und zusätzlich die wenigstens eine Heizquelle (4) betrieben wird.

7. Verfahren nach Anspruch 5 oder 6,
**dadurch gekennzeichnet, dass** bei Nichterfüllen sowohl der ersten als auch der zweiten Bedingung nur der zweite Wärmekreislauf (W2) mit der wenigstens einen Heizquelle (4) als Wärmequelle betrieben wird.

## Claims

1. Heating system for heating a vehicle inner space of a vehicle which has an internal combustion engine (1) by means of a heating heat exchanger (2), comprising
- a first thermal circuit (W1) which connects the heating heat exchanger (2) to the internal combustion engine (1) and through which a coolant flows,
- a bypass line (L) of the first thermal circuit (W1), which bypass line bypasses the internal combustion engine (1) with a bypass valve (3) in order to form a second thermal circuit (W2),
- at least one heat source (4) which is arranged in the flow direction of the coolant downstream of the bypass line (L), and
- a first temperature sensor (S1) for measuring the coolant temperature at a coolant output (1.1) of the internal combustion engine (1),
**characterised in that**
- a second temperature sensor (S2) for measuring the coolant temperature is provided at a coolant input (1.2) of the internal combustion engine (1),
- a third temperature sensor (S3) for measuring the coolant temperature in the flow direction of the coolant is provided upstream of the at least one heat source (4), and
- when there is present a first condition in which the first temperature sensor (S1) detects at least one predetermined desired flow temperature (T_{4, Soll}) of the heating heat exchanger (2), the first thermal circuit (W1) is operated only with the internal combustion engine (1) as a heat source, and when this first condition is not present and when there is present a second condition in which during operation of the first thermal circuit (W1) the first temperature sensor (S1) detects a coolant temperature which is above the one detected by the second temperature sensor (S2), the at least one heat source (4) is operated as an additional heat source or in which, when the second thermal circuit (W2) is operated, the first temperature sensor (S1) detects a coolant temperature which is above the one detected by the third temperature sensor (S3), the first thermal circuit (W1) is operated together with the at least one heat source (4).

2. Heating system for heating a vehicle inner space of a vehicle which has an internal combustion engine (1) by means of a heating heat exchanger (2),comprising
- a first thermal circuit (W1) which connects the heating heat exchanger (2) to the internal combustion engine (1) and through which a coolant flows,
- a bypass line (L) of the first thermal circuit (W1), which bypass line bypasses the internal combustion engine (1), with a bypass valve (3) in order to form a second thermal circuit (W2),
- at least one heat source (4) which is arranged in the flow direction of the coolant downstream of the bypass line (L), and
- a first temperature sensor (S1) for measuring the coolant temperature at a coolant output (1.1) of the internal combustion engine (1),
**characterised in that**
- a second temperature sensor (S2) for measuring the coolant temperature is provided at the input of the bypass valve (3),
- when there is present a first condition in which the first temperature sensor (S1) detects at least one predetermined desired flow temperature (T_{4, soll}) of the heating heat exchanger (2), the first thermal circuit (W1) is operated only with the internal combustion engine (1) as a heat source and, when this first condition is not present and when there is present a second condition in which, during operation of the first thermal circuit (W1), the first temperature sensor (S1) detects a coolant temperature which is above the one detected by the second temperature sensor (S2), the at least one heat source (4) is operated as an additional heat source or in which, when the second thermal circuit (W2) is operated, the first temperature sensor (S1) detects a coolant temperature which is above the one detected by the second temperature sensor (S2), the first thermal circuit (W1) is operated together with the at least one heat source (4).

3. Heating system according to Claim 1 or 2,
**characterised in that**, when both the first condition and the second condition are not met, only the second thermal circuit (W2) is operated with the at least one heat source (4) as a source of heat.

4. Heating system according to any one of the preceding claims,
**characterised in that** the at least one heat source (4) is a heat exchanger and/or a PTC resistor and/or a fossil fuel auxiliary heater.

5. Heating strategy for heating a vehicle inner space of a vehicle which has an internal combustion engine (1) by means of a heating heat exchanger (2), in particular in accordance with any one of the preceding claims, using
- a first thermal circuit (W1) which connects the heating heat exchanger (2) to the internal combustion engine (1) and through which a coolant flows,
- a bypass line (L) of the first thermal circuit (W1), which bypass line bypasses the internal combustion engine (1), with a bypass valve (3) in order to form a second thermal circuit (W2), and
- at least one heat source (4) which is arranged in the flow direction of the coolant downstream of the bypass line (L),
**characterised in that**
- when there is present a first condition in which the coolant temperature (T1) at a coolant output (1.1) of the internal combustion engine (1) reaches at least a predetermined desired flow temperature (T_{4,soll}) of the heating heat exchanger (2), the first thermal circuit (W1) is operated only with the internal combustion engine (1) as a heat source and, when this first condition is not present and when there is present a second condition in which, when the first thermal circuit (W1) is operated, the coolant temperature (T1) at the coolant output (1.1) of the internal combustion engine (1) is above the coolant temperature (T2) at a coolant input (1.2) of the internal combustion engine (1), the at least one heat source (4) is operated in addition as another heat source, or in which, when the second thermal circuit (W2) is operated, the coolant temperature (T1) at the coolant output (1.1) of the internal combustion engine (1) is above the coolant temperature (T3) in the flow direction of the coolant upstream of the at least one heat source (4), the first thermal circuit (W1) and in addition the at least one heat source (4) are operated.

6. Heating strategy for heating a vehicle inner space of a vehicle which has an internal combustion engine (1) by means of a heating heat exchanger (2), in particular in accordance with any one of Claims 1 to 4, using
- a first thermal circuit (W1) which connects the heating heat exchanger (2) to the internal combustion engine (1) and through which a coolant flows,
- a bypass line (L) of the first thermal circuit (W1), which bypass line bypasses the internal combustion engine (1), with a bypass valve (3) in order to form a second thermal circuit (W2), and
- at least one heat source (4) which is arranged in the flow direction of the coolant downstream of the bypass line (L),
**characterised in that**,
when there is present a first condition in which the coolant temperature (T1) at a coolant output (1.1) of the internal combustion engine (1) reaches at least a predetermined desired flow temperature (T_{4,soll}) of the heating heat exchanger (2), the first thermal circuit (W1) is operated only with the internal combustion engine (1) as a heat source and, when this first condition is not present and when there is present a second condition in which, when the first thermal circuit (W1) is operated, the coolant temperature (T1) at the coolant output (1.1) of the internal combustion engine (1) is above the coolant temperature (T2) at the input of the bypass valve (3), the at least one heat source (4) is operated in addition as another heat source, or in which, when the second thermal circuit (W2) is operated, the coolant temperature (T1) at the coolant output (1.1) of the internal combustion engine (1) is above the coolant temperature (T2) at the input of the bypass valve (3), the first thermal circuit (W1) and in addition the at least one heat source (4) are operated.

7. Method according to Claim 5 or 6,
**characterised in that**, when both the first condition and the second condition are not met, only the second thermal circuit (W2) is operated with the at least one heat source (4) as a heat source.

## Revendications

1. Système de chauffage pour chauffer un habitacle de véhicule d'un véhicule comportant un moteur à combustion interne (1) au moyen d'un échangeur thermique de chauffage (2), comprenant
- un premier circuit de chaleur (W1) couplant l'échangeur thermique de chauffage (2) au moteur à combustion interne (1) et parcouru par un fluide de refroidissement,
- une conduite de dérivation (L), contournant le moteur à combustion interne (1), du premier circuit de chaleur (W1) avec une soupape de dérivation (3) pour former un deuxième circuit de chaleur (W2),
- au moins une source de chauffage (4) agencée, dans le sens d'écoulement du fluide de refroidissement, après la conduite de dérivation (L), et
- un premier capteur de température (S1) pour mesurer la température de fluide de refroidissement au niveau d'une sortie de fluide de refroidissement (1.1) du moteur à combustion interne (1),
**caractérisé en ce que**
- un deuxième capteur de température (S2) est prévu pour mesurer la température de fluide de refroidissement au niveau d'une entrée de fluide de refroidissement (1.2) du moteur à combustion interne (1),
- un troisième capteur de température (S3) est prévu pour mesurer la température de fluide de refroidissement, dans le sens d'écoulement du fluide de refroidissement, avant l'au moins une source de chauffage (4), et
- en présence d'une première condition selon laquelle le premier capteur de température (S1) détecte au moins une température aller de consigne (T_{4,soll}) prédéterminée de l'échangeur thermique de chauffage (2), on fait fonctionner le premier circuit de chaleur (W1) seulement avec le moteur à combustion interne (1) comme source de chaleur et, en l'absence de cette première condition et en présence d'une deuxième condition selon laquelle, lors du fonctionnement du premier circuit de chaleur (W1), le premier capteur de température (S1) détecte une température de fluide de refroidissement qui est supérieure à la température de fluide de refroidissement détectée par le deuxième capteur de température (S2), on fait fonctionner l'au moins une source de chauffage (4) comme autre source de chaleur ou selon laquelle, lors du fonctionnement du deuxième circuit de chaleur (W2), le premier capteur de température (S1) détecte une température de fluide de refroidissement qui est supérieure à la température de fluide de refroidissement détectée par le troisième capteur de température (S3), on fait fonctionner le premier circuit de chaleur (W1) conjointement avec l'au moins une source de chauffage (4).

2. Système de chauffage pour chauffer un habitacle de véhicule d'un véhicule comportant un moteur à combustion interne (1) au moyen d'un échangeur thermique de chauffage (2), comprenant
- un premier circuit de chaleur (W1) couplant l'échangeur thermique de chauffage (2) au moteur à combustion interne (1) et parcouru par un fluide de refroidissement,
- une conduite de dérivation (L), contournant le moteur à combustion interne (1), du premier circuit de chaleur (W1) avec une soupape de dérivation (3) pour former un deuxième circuit de chaleur (W2),
- au moins une source de chauffage (4) agencée, dans le sens d'écoulement du fluide de refroidissement, après la conduite de dérivation (L), et
- un premier capteur de température (S1) pour mesurer la température de fluide de refroidissement au niveau d'une sortie de fluide de refroidissement (1.1) du moteur à combustion interne (1),
**caractérisé en ce que**
- un deuxième capteur de température (S2) est prévu pour mesurer la température de fluide de refroidissement à l'entrée de la soupape de dérivation (3),
- en présence d'une première condition selon laquelle le premier capteur de température (S1) détecte au moins une température aller de consigne (T_{4,soll}) prédéterminée de l'échangeur thermique de chauffage (2), on fait fonctionner le premier circuit de chaleur (W1) seulement avec le moteur à combustion interne (1) comme source de chaleur et, en l'absence de cette première condition et en présence d'une deuxième condition selon laquelle, lors du fonctionnement du premier circuit de chaleur (W1), le premier capteur de température (S1) détecte une température de fluide de refroidissement qui est supérieure à la température de fluide de refroidissement détectée par le deuxième capteur de température (S2), on fait fonctionner l'au moins une source de chauffage (4) comme autre source de chaleur ou selon laquelle, lors du fonctionnement du deuxième circuit de chaleur (W2), le premier capteur de température (S1) détecte une température de fluide de refroidissement qui est supérieure à la température de fluide de refroidissement détectée par le deuxième capteur de température (S2), on fait fonctionner le premier circuit de chaleur (W1) conjointement avec l'au moins une source de chauffage (4).

3. Système de chauffage selon la revendication 1 ou 2, **caractérisé en ce que**, lorsque ni la première condition ni la deuxième condition ne sont satisfaites, on fait fonctionner seulement le deuxième circuit de chaleur (W2) avec l'au moins une source de chauffage (4) comme source de chaleur.

4. Système de chauffage selon l'une des revendications précédentes, **caractérisé en ce que** l'au moins une source de chauffage (4) est un échangeur thermique et/ou une résistance à coefficient positif de température et/ou un chauffage additionnel à combustible fossile.

5. Stratégie de chauffage pour chauffer un habitacle de véhicule d'un véhicule comportant un moteur à combustion interne (1) au moyen d'un échangeur thermique de chauffage (2), notamment selon l'une des revendications précédentes, utilisant
- un premier circuit de chaleur (W1) couplant l'échangeur thermique de chauffage (2) au moteur à combustion interne (1) et parcouru par un fluide de refroidissement,
- une conduite de dérivation (L), contournant le moteur à combustion interne (1), du premier circuit de chaleur (W1) avec une soupape de dérivation (3) pour former un deuxième circuit de chaleur (W2), et
- au moins une source de chauffage (4) agencée, dans le sens d'écoulement du fluide de refroidissement, après la conduite de dérivation (L),
**caractérisée en ce que**
- en présence d'une première condition selon laquelle la température de fluide de refroidissement (T1) au niveau d'une sortie de fluide de refroidissement (1.1) du moteur à combustion interne (1) atteint au moins une température aller de consigne (T_{4,soll}) prédéterminée de l'échangeur thermique de chauffage (2), on fait fonctionner le premier circuit de chaleur (W1) seulement avec le moteur à combustion interne (1) comme source de chaleur et, en l'absence de cette première condition et en présence d'une deuxième condition selon laquelle, lors du fonctionnement du premier circuit de chaleur (W1), la température de fluide de refroidissement (T1) au niveau de la sortie de fluide de refroidissement (1.1) du moteur à combustion interne (1) est supérieure à la température de fluide de refroidissement (T2) au niveau d'une entrée de fluide de refroidissement (1.2) du moteur à combustion interne (1), on fait fonctionner en plus l'au moins une source de chauffage (4) comme autre source de chaleur ou selon laquelle, lors du fonctionnement du deuxième circuit de chaleur (W2), la température de fluide de refroidissement (T1) au niveau de la sortie de fluide de refroidissement (1.1) du moteur à combustion interne (1) est supérieure à la température de fluide de refroidissement (T3) avant, dans le sens d'écoulement du fluide de refroidissement, l'au moins une source de chauffage (4), on fait fonctionner le premier circuit de chaleur (W1) et en plus l'au moins une source de chauffage (4).

6. Stratégie de chauffage pour chauffer un habitacle de véhicule d'un véhicule comportant un moteur à combustion interne (1) au moyen d'un échangeur thermique de chauffage (2), notamment selon l'une des revendications 1 à 4, utilisant
- un premier circuit de chaleur (W1) couplant l'échangeur thermique de chauffage (2) au moteur à combustion interne (1) et parcouru par un fluide de refroidissement,
- une conduite de dérivation (L), contournant le moteur à combustion interne (1), du premier circuit de chaleur (W1) avec une soupape de dérivation (3) pour former un deuxième circuit de chaleur (W2), et
- au moins une source de chauffage (4) agencée, dans le sens d'écoulement du fluide de refroidissement, après la conduite de dérivation (L),
**caractérisée en ce que**
- en présence d'une première condition selon laquelle la température de fluide de refroidissement (T1) au niveau d'une sortie de fluide de refroidissement (1.1) du moteur à combustion interne (1) atteint une température aller de consigne (T_{4,soll}) prédéterminée de l'échangeur thermique de chauffage (2), on fait fonctionner le premier circuit de chaleur (W1) seulement avec le moteur à combustion interne (1) comme source de chaleur et, en l'absence de cette première condition et en présence d'une deuxième condition selon laquelle, lors du fonctionnement du premier circuit de chaleur (W1), la température de fluide de refroidissement (T1) au niveau de la sortie de fluide de refroidissement (1.1) du moteur à combustion interne (1) est supérieure à la température de fluide de refroidissement (T2) au niveau de l'entrée de la soupape de dérivation (3), on fait fonctionner en plus l'au moins une source de chauffage (4) comme autre source de chaleur ou selon laquelle, lors du fonctionnement du deuxième circuit de chaleur (W2), la température de fluide de refroidissement (T1) au niveau de la sortie de fluide de refroidissement (1.1) du moteur à combustion interne (1) est supérieure à la température de fluide de refroidissement (T2) au niveau de l'entrée de la soupape de dérivation (3), on fait fonctionner le premier circuit de chaleur (W1) et en plus l'au moins une source de chauffage (4).

7. Procédé selon la revendication 5 ou 6, **caractérisé en ce que**, lorsque ni la première condition ni la deuxième condition ne sont satisfaites, on fait fonctionner seulement le deuxième circuit de chaleur (W2) avec l'au moins une source de chauffage (4) comme source de chaleur.
